# EUROPÄISCHE PATENTANMELDUNG

(11) **EP 0 874 476 A2**
(43) Veröffentlichungstag der Anmeldung: **28.10.1998**
(21) Anmeldenummer: 98440061.4
(22) Anmeldetag: 26.03.1998
(51) Int. Cl.: H04B 7/24

(54) **Dezentrales Funksystem und Funkstation dafür**

(30) Priorität: 18.04.1997 DE 19716432
(71) Anmelder: Alcatel Alsthom Compagnie Generale d'Electricité, 75088 Paris (FR)
(72) Erfinder: Mönch, Egon, 75196 Remchingen (DE)
(74) Vertreter: Knecht, Ulrich Karl, Dipl.-Ing.

(57) **Zusammenfassung**

Bekannt ist ein mehrkanaliges dezentrales Funksystem, bei dem jede Funkstation vor Aufbau einer Funkverbindung zu einer benachbarten Funkstation alle Kanäle abtastet und eine sogenannte Kanalbelegungsliste erstellt. Die benachbarte Funkstation kann als Relaisstation dienen, indem sie in entsprechender Weise eine Funkverbindung zu einer weiteren Funkstation aufbaut (Funkkette). Demnach muß jede Funkstation einen Empfänger zum Abtasten der Kanäle haben.

Bei dem erfindungsgemäßen Funksystem senden alle Funkstationen (N1 bis N7) Funksignale mit ihnen zugeordneten Kennungen (11 bis 17) aus. Jede Funkstation (N3) hat einen Speicher, in dem eine erste Liste (LA3) mit denjenigen Kennungen (12; 14) abgelegt ist, die diese Funkstation (N3) direkt von der zumindest einen benachbarten Funkstation (N2; N4) empfängt, und in dem eine zweite Liste (LB3) mit denjenigen Kennungen (13, 11; 13, 15) abgelegt ist, die die zumindest eine benachbarte Funkstation (N2; N4) direkt von den zu ihr benachbarten Funkfeststationen (N3, N1; N3, N5) empfängt und an diese Funkstation (N3) weiterleitet.

Die Funkstationen sind demnach einfach aufgebaut. Außerdem kann das Funksystem auch ein Gleichkanalsystem sein.

## Beschreibung

Die Erfindung betrifft ein dezentrales Funksystem nach dem Oberbegriff des Anspruch 1 sowie eine Funkstation dafür.

Aus DE 39 08 940 A1 ist ein dezentrales Funksystem bekannt, das mehrere Funkstationen enthält. Jede der Funkstationen hat zumindest eine benachbarte Funkstation, mit der sie in direkter Funkverbindung steht. Das bekannte Funksystem stellt mehrere Kanalpaare für Duplex-Funkübertragungen zwischen den Funkstationen zur Verfügung. Um eine sichere Funkübertragung durchführen zu können, prüft eine jede Funkstation vor Aufbau einer Funkverbindung, den Belegungszustand aller Kanäle und erstellt eine sogenannte Kanalbelegungsliste. Danach wird auf einem nicht belegten Kanal eine Funkverbindung zu einer benachbarten Funkstation aufgebaut. Wenn die benachbarte Funkstation nicht als Zielstation, sondern als Relaisstation dienen soll, wertet die benachbarte Funkstation ihre Kanalbelegungsliste aus, um eine Funkverbindung zu einer weiteren Funkstation aufzubauen. Dadurch ist der Aufbau von sogenannten Funkketten möglich. Bei dem beschriebenen Funksystem aus DE 39 08 940 A1 muß jedoch jede Funkstation alle Kanäle vor dem Verbindungsaufbau prüfen, d.h. jede Funkstation muß einen Empfänger zum Abtasten der Kanäle haben (scanning receiver). Außerdem kann in dem bekannten Funksystem eine Funkkette nur dann aufgebaut werden, wenn für jede der Funkverbindungen ein freies Kanalpaar gefunden wird, d.h. wenn mehrere Funkfrequenzen frei verfügbar sind.

Aufgabe der Erfindung ist es ein Funksystem mit einfach aufgebauten Funkstationen zu schaffen. Der Aufbau von Funkverbindungen soll unabhängig davon sein, ob das Funksystem ein Mehrfrequenzsystem oder ein Gleichfrequenzsystem darstellt.

Gelöst wird die Aufgabe durch ein Funksystem mit den Merkmalen des Anspruch 1 sowie durch eine Funkstation mit den Merkmalen des nebengeordneten Anspruchs.

Demnach sendet jede Funkstation Funksignale aus mit einer ihr zugeordneten Kennung und enthält einen Speicher, in dem eine erste Liste mit denjenigen Kennungen abgelegt ist, die diese Funkstation direkt von der zumindest einen benachbarten Funkstation empfängt, und in dem eine zweite Liste mit denjenigen Kennungen abgelegt ist, die die zumindest eine benachbarte Funkstation direkt von den zu ihr benachbarten Funkfeststationen empfängt und an diese Funkfeststation weiterleitet.

Dadurch wird erreicht, daß in jeder Funkstation stets aktuelle Listen gespeichert sind, die angeben, zu welchen benachbarten Funkstationen eine direkte Funkverbindung aufgebaut werden kann und zu welchen anderen Funkstationen eine indirekte Funkverbindung aufgebaut werden kann. Da Kennungen erfaßt und gespeichert werden, sind keine Empfänger zum Abtasten von Kanälen erforderlich. Außerdem kann das Funksystem auch ein Gleichkanalsystem sein.

Vorteilhafte Ausgestaltungen der Erfindung sind den Unteransprüchen zu entnehmen.

Im weiteren wird ein Ausführungsbeispiel anhand der folgenden Zeichnungen beschrieben:
- Fig. 1,: die schematisch ein Funksystem mit mehreren Funkstationen zeigt;
- Fig. 2,: die schematisch die Inhalte der gespeicherten Listen für eine Funkstation darstellt;
- Fig. 3,: die schematisch den Aufbau von Datenpaketen zeigt, die die Funkstation aussendet.

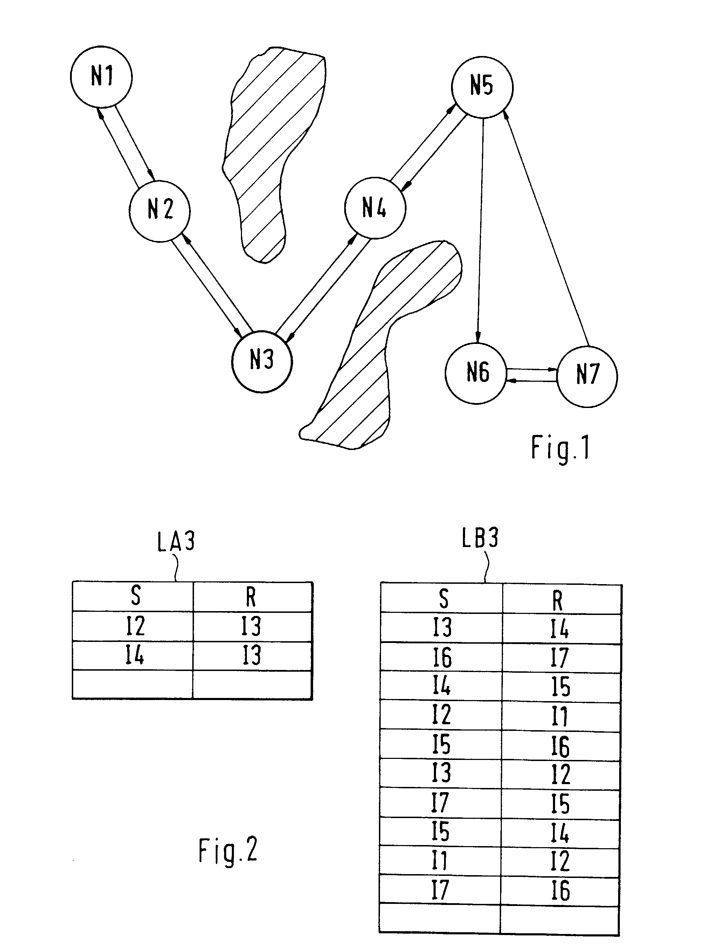

In Fig. 1 ist schematisch ein Funksystem mit 7 Funkstationen N1 bis N7 dargestellt. Die Funkstationen sind mobile Funkstationen, die sich in einem Gebiet frei bewegen können. Demnach ändern sich fortlaufend die Bedingungen für die Funkausbreitung in dem Funksystem, so daß nicht jederzeit alle Funkstationen untereinander direkt in Funkverbindung stehen können. In Fig. 1 ist eine Empfangssituation dargestellt, bei der die Funkstationen N1 bis N7 folgendermaßen untereinander in Funkverbindung stehen:

Eine direkte Funkverbindung sowohl in Sende- als auch Empfangsrichtung (Duplex-Funkverbindung) haben die Funkstationen N1 mit N2, N2 mit N3, N3 mit N4, N4 mit N5 und N6 mit N7. Außerdem bestehen folgende Funkverbindungen in nur einer Richtung: Zwischen N5 und N6, wobei nur N6 von N5 empfangen kann, und zwischen N5 und N7, wobei nur N5 von N7 empfangen kann. Die Gründe, warum nicht jede der Funkstationen mit jeder anderen Funkstation direkte Funkverbindung hat, sind im wesentlichen folgende: Erstens Funkabschattung durch feste oder bewegliche Hindernisse (in Fig. 1 schraffiert dargestellt); zweitens Veränderung des Ausbreitungsmediums; drittens auftretende Fehler im Sende- oder Empfangsteil, so daß nur eine einseitige Funkübertragung möglich ist.

Bei der in der Fig. 1 dargestellten Empfangssituation kann beispielsweise die Funkstation N2 nicht direkt Funkverbindung mit der Station N5 aufnehmen, sonder muß eine Funkverbindung über die anderen Funkstationen N3 und N4 aufnehmen, die die Funktion von Relaisstationen einnehmen und die die Funksignale zwischen den Funkstationen N2 und N5 weiterleiten. Für eine Funkübertragung zwischen der Funkstation N4 und der Funkstation N7 stellt sich die Situation nach Fig. 1 wie folgt dar: Funksignale, die von N4 an N7 gesendet werden sollen, müssen über die Funkstationen N5 und N6 weitergeleitet werden. Funksignale, die in Gegenrichtung von der Funkstation N7 zur Funkstation N4 gesendet werden sollen, müssen lediglich über die Funkstation N5 weitergeleitet werden.

Wie Fig. 1 beispielhaft zeigt, kann die Situation sehr komplex sein. Je nach der gegebenen Situation müssen die Funksignale über eine oder mehrere Funkstationen weitergeleitet werden, um schließlich bei der für den Empfang des Funksignals bestimmten Funkstation (Zielstation) anzukommen. Dieses Weiterleiten von Funksignalen wird im folgenden auch Routing genannt. Damit eine Funkübertragung und ein Routing sicher durchgeführt werden kann, haben das erfindungsgemäße Funksystem und die dafür vorgesehenen Funkstationen folgende Merkmale, die im weiteren anhand der Situation für die Funkstation N3 näher beschrieben werden.

Die Funkstation N3 sendet, wie jede andere der Funkstationen, Funksignale mit einer ihr zugeordneten Kennung aus. Außerdem hat die Funkstation N3, wie jede andere Funkstation, einen Speicher, in dem eine erste und eine zweite Liste, wie in Fig. 2 dargestellt, abgelegt sind.

So wie die Funkstation N3 sendet jede Funkstation Funksignale aus mit einer ihr zugeordneten Kennung und Kennungen aus einer ersten Liste und einer zweiten Liste. Auch enthält jede Funkstation enthält einen Speicher, in dem eine erste Liste mit denjenigen Kennungen abgelegt ist, die diese Funkstation direkt von der zumindest einen benachbarten Funkstation empfängt, und in dem eine zweite Liste mit denjenigen Kennungen abgelegt ist, die alle anderen Funkstationen direkt von den zu ihnen benachbarten Funkfeststationen empfangen. Mit jedem Funkpaket wird eine Kennung aus der ersten Liste und eine Kennung aus der zweiten Liste weitergeleitet. Mit der Kennung, die der sendenden Funkstation zugeordnet ist, wird in der empfangenen Funkstation eine erste Liste aktualisiert. Mit den Kennungen, die die sendende Funkstation ihrer ersten Liste und ihrer zweiten Liste entnommen hat, wird in der empfangenen Funkstation eine zweite Liste aktualisiert. Die Listen werden beim Einschalten automatisch aufgebaut und sind in Fig. 2 vollständig für die Empfangssituation aus Fig.1 dargestellt.

Für die Funkstation N3 heißt das:
Die im Speicher abgelegte erste Liste LA3 enthält Kennungen, die die Funkstation N3 direkt von ihren benachbarten Funkstationen N2 und N4 empfängt, nämlich die Kennungen I4 bzw. I2. Diese Kennungen I4 und I2 sind innerhalb der ersten Liste LA3 in einer ersten Spalte S eingetragen. Demnach enthält die erste Spalte S diejenigen Kennungen, die von benachbarten Funkstationen gesendet wurden. In einer zweiten Spalte R innerhalb der ersten Liste LA3 sind die Kennungen derjenigen Funkstationen eingetragen, die gesendeten Kennungen 14 und 12 der Funkstationen N2 bzw. N4 empfangen haben. In diesem Fall ist in der zweiten Spalte R selbstverständlich die Kennung für die Funkstation N3 eingetragen. Der ersten Liste LA3 kann man somit entnehmen, daß die Funkstation N3 direkt Funksignale von den benachbarten Funkstationen N2 und N4 empfängt.

Die zweite Liste LB3 enthält diejenigen Kennungen, die die benachbarten Funkstationen N2 und N4 empfangen. Auch in der zweiten Liste LB3 ist eine erste Spalte S enthalten, in der die Kennungen der sendenden Funkstationen eingetragen sind und eine zweite Spalte R enthalten, in der die Kennungen der empfangenen Funkstationen enthalten sind. Bei dem in Fig. 2 dargestelltem Beispiel ist in der ersten Zeile der Liste LB3 die Kennung I3 innerhalb der Spalte S und die Kennung I4 innerhalb der Spalte R eingetragen. Demnach entnimmt man dieser Zeile, daß die Funkstation N4 (R= I4) ein Funksignal direkt von der Funkstation N3 (S=I3) empfangen hat. In einer anderen Zeile der Liste LB3 sind die Kennungen S=I5 und R=I4 angegeben. Demzufolge hat die Funkstation N4 ein Funksignal von der Funkstation N5 direkt empfangen. In einer anderen Zeile ist angegeben S = I3 und R = I2, wonach die Funkstation N2 Funksignale direkt von der Station N3 empfängt. In einer weiteren Zeile der zweiten Liste LB3 ist eingetragen S = I1 und R = I2, wonach die Funkstation N2 direkt Funksignale von der Funkstation N1 empfängt. Somit sind in der zweiten Liste LB3 für alle benachbarten Funkstationen N2 und N4 die empfangenen Kennungen I1 und I3 bzw. I3 und I5 angegeben.

Außerdem enthält die zweite Liste LB3 auch Angaben zu den übrigen Funkstationen N1, N5, N6 und N7. In einer Zeile der Liste ist angegeben, daß die Funkstation N1 direkt Funksignale von der Funkstation N2 empfängt (S = I2 und R = I1). Für die Funkstation N5 ist angegeben, daß diese direkt von den Funkstationen N4 oder N7 empfängt (S = I4 und R = I5 bzw. S = I7 und R = I5). In einer weiteren Zeile ist eingetragen, daß N6 direkt von N5 oder N7 empfängt (S = I5 und R = I6 bzw. S = I7 und R = I6) und daß N7 lediglich von N6 direkt empfängt (S = I6 und R = I7).

Durch die Speicherung der in Fig. 2 dargestellten Listen LA3 und LB3 verfügt die Funkstation N3 über Verbindungsdaten, die angeben, zu welchen benachbarten Funkstationen N2 und N4 eine direkte Funkverbindung aufgebaut werden kann und zu welchen nicht benachbarten Funkstationen N1, N5, N6 und N7 eine indirekte Funkverbindung aufgebaut werden kann. Neben der Funkstation N3 verfügen auch die anderen Funkstationen des Funksystems über entsprechende Listen, so daß Funksignale innerhalb des Funksystems schnell und einfach weitergeleitet werden können (Routing).

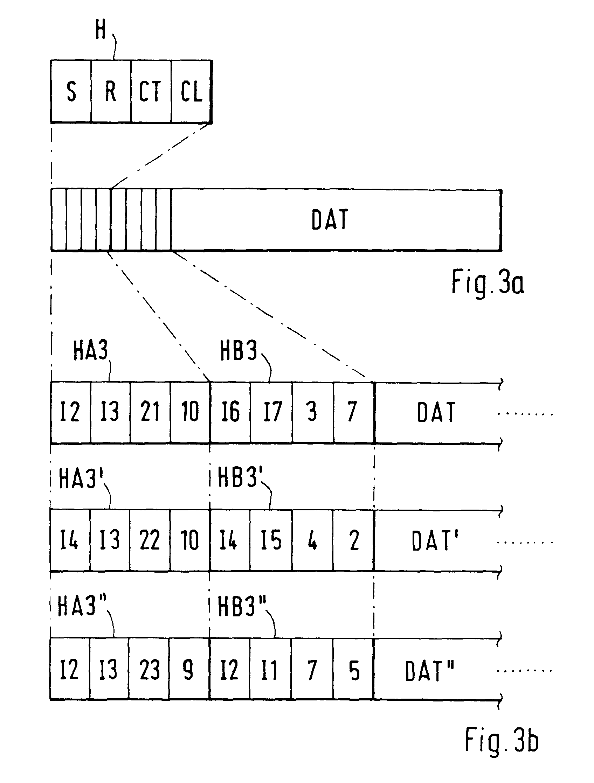

Im weiteren wird anhand der Fig. 3 näher beschrieben, wie die gespeicherten Listen angelegt werden. Das Verfahren arbeitet in jeder Station identisch, so daß es auf ein dezentrales Funk-LAN (Local Area Network) angewendet werden kann.

Das beschriebene Funksystem ist ein digitales Funksystem, bei dem Datenpakete übertragen werden. In Fig. 3a ist schematisch der Aufbau eines solchen Datenpaketes DAT dargestellt. Jedes Datenpaket beginnt mit zwei Datenfeldern H, die im weiteren auch als Header bezeichnet werden. Falls keine Datenpakete mit Nutzdaten übertragen werden müssen, werden leere Datenpakete mit den Headern in ausreichenden Zeitabständen gesendet, damit die zwei Listen (siehe Fig. 2, LA3 und LB3) ständig aktualisiert werden können. Das erste Datenfeld enthält Angaben aus der ersten Liste und das zweite Datenfeld enthält Angaben aus der zweiten Liste. In Fig. 3b sind drei Datenpakete schematisch dargestellt, die die Funkstation N3 nacheinander aussendet, nämlich die Datenpakete DAT, DAT' und DAT". Jedes der Datenpakete hat ein erstes Datenfeld HA3, HA3' bzw. HA3" und zweites Datenfeld HB3, HB3' und HB3". Jedes erste Datenfeld enthält Angaben aus der ersten Liste (siehe Fig. 2, LA3) und jedes zweite Datenfeld enthält Angaben aus der zweiten Liste (siehe Fig. 2, LB3).

Mit jeder Übernahme der Angaben aus den Listen in die Header werden die Angaben aus der jeweils nächsten Zeile der Listen übernommen, so daß die Angaben aus den Listen periodisch an die Reihe kommen. Jedes Datenfeld ist in vier Subdatenfelder unterteilt, nämlich in ein erstes Subdatenfeld S, in ein zweites Subdatenfeld R, in ein drittes Subdatenfeld CT und in ein viertes Subdatenfeld CL. Die Subdatenfelder CT und CL sind auch in den Listen LA3, LB3 nach Fig. 2 enthalten, sie sind wegen der Übersichtlichkeit jedoch nicht eingezeichnet. In das erste Subdatenfeld S wird die Kennung einer sendenden Funkstation eingetragen, in das zweite Subdatenfeld R wird die Kennung der Funkstation eingetragen, die die gesendete Kennung empfängt. Diese Subdatenfelder S und R haben Einträge, die den Einträgen der Listen nach Fig. 2 innerhalb der Spalten S bzw. R entsprechen. In das dritte Subdatenfeld CT wird ein Zeitstempfel eingetragen und in das vierte Subdatenfeld CL wird ein Zählerstand eingetragen. Die Einträge in die Subdatenfelder werden im weiteren näher anhand des Beispieles nach Fig.3b erläutert:

Es wird angenommen, daß die Funkstation N3 bereits die Kennung I2 von der benachbarten Funkstation N2 empfangen hat. Die Kennung I2 wurde in der ersten Liste LA3 innerhalb der Spalte S gespeichert. Diese Information S=I2 und R=I3 soll nun an andere Funkstationen gesendet werden.

Außerdem hat die Funkstation N3 über die benachbarte Funkstation N4 früher bereits ein Funksignal empfangen, das die Kennung S=I6 bzw. R=I7 enthielt. Diese Kennungen waren im Datenfeld (Header) des Funksignales innerhalb Subdatenfelder mit S=I6 und R=I7 eingetragen. Demnach wird deutlich, daß die Funkstation N7 (R=I7) von der Funkstation N6 (S=I6) direkt empfangen werden kann. Diese Information S=I6 und R=I7 wurde innerhalb der Funkstation N3 in der zweiten Liste LB3 gespeichert und soll nun auch an andere Funkstationen weitergegeben werden.

Vor dem Senden des Datenpaketes DAT bildet nun die Funkstation N3 durch Zugriff auf die erste Liste LA3 das erste Datenfeld HA3 mit folgenden Einträgen S = I2, R = I3, CT = 21 und CL = 10. Der Zählerstand CL wurde beim Erzeugen oder Ersetzen des Eintrages in der ersten Liste auf einen maximalen Wert (zum Beispiel 10) gesetzt. Beim Zugriff auf die erste Liste wird der Zähler CL für den nächsten Zugriff um eins heruntergezählt. Hat der Zähler eine unterste Grenze erreicht. Wird der Eintrag in der ersten Liste gelöscht.

Damit kann dem ersten Datenfeld HA3 folgende Information entnommen werden: Die Funkstation N3 kann direkt von der Funkstation N2 empfangen (S = I2 und R = I3). Die Information hat den Zeitstempel CT = 21 und Zählerstand CL = 10. Der Zeitstempel CT entspricht der laufenden Systemzeit und gibt an zu welchem Zeitpunkt das Datenfeld HA3 erstellt wurde. Demzufolge kann aufgrund des Zeitstempels CT erkannt werden, wie alt das Datenfeld ist und aufgrund des Zählerstandes CL erkannt werden, wie oft das Datenfeld bereits weitergeleitet wurde.

Sowohl der Zeitstempel als auch der Zählerstand sind Kriterien für die Verweildauer eines Datenfeldes innerhalb des Funksystems. Anhand dieser Kriterien kann ein "überaltetes Datenfeld" vor oder nach der Funkübertragung entfernt werden, wenn der Zählerstand eine untere Grenze erreicht hat. Oder es kann nach der Funkübertragung durch ein "neueres Datenfeld" ersetzt werden, wenn der Zeitstempel aktueller ist.

Zusätzlich zum ersten Datenfeld bildet die Funkstation N3 durch Zugriff auf die zweite Liste LB3 das zweite Datenfeld HB3 mit folgenden Einträgen: S = I6, R = I7, CT = 3 und CL = 7. Dabei wird der Zähler CL in der Liste 2 für den nächsten Zugriff um 1 heruntergezählt. Hat der Zähler eine unterste Grenze erreicht. Wird der Eintrag in der zweiten Liste gelöscht. Dem Datenfeld HB3 kann folgende Information entnommen werden: Die Funkstation N7 hat von der Funkstation N6 ein Funksignal direkt empfangen. Das Datenfeld HB3 wurde zum zum Zeitpunkt CT = 3 von der Funkstation N7 erstellt. Diese Systemzeit wird beim Weiterleiten beibehalten. Die Information, daß die Funkstation N7 direkt von der Funkstation N6 empfängt (S = I6 und R = I7) wurde bereits drei Mal innerhalb des Funknetzes weitergeleitet (3 =10-CL =10-7). Durch das Senden dieses Datenpaketes DAT mit den zugeordneten Datenfeldern HA3 und HB3 werden den zur Funkstation N3 benachbarten Funkstationen N2 und N4 die oben genannten Informationen mitgeteilt.

Demnach erhält beispielsweise die Funkstation N2 die Information aus dem ersten Datenfeld HA3, daß die Funkstation N3 von ihr direkt Funksignale empfangen kann (S = I2 und R = I3).
Eine Information aus dem ersten Datenfeld wird im Empfänger N2 zunächst dahingehend geprüft, ob sie ursprünglich selbst von N2 erzeugt wurde, wenn ja, wird sie verworfen. Sonst wird die Information in der Funkstation N2 in die zweite Liste eingetragen, falls die Information noch nicht enthalten ist und der Zähler CL eine untere Grenze noch nicht unterschritten hat, ansonsten wird sie verworfen. Falls die Information schon enthalten ist, wird sie aktualisiert, wenn sie einen neueren Zeitstempel trägt. Wenn sie schon mit einem neueren Zeitstempel eingetragen ist, wird sie verworfen.

Außerdem erhält die Funkstation N2 aus dem zweiten Datenfeld HB3 die Information, daß die Funkstation N7 von der Funkstation N6 direkt Funksignale empfangen kann (S = I6 und R = I7). Aufgrund des empfangenen Datenfeldes HB3 wird die Funkstation N2 ebenfalls ihre zweite Liste überprüfen und gegebenenfalls erneuern (entsprechend dem Datenfeld HA3).
Schließlich aufgrund der Tatsache, daß die Station N2 ein beliebiges Paket von der Station N3 empfangen hat, wird die erste Liste der Station N2 aktualisiert. Es erfolgt ein Eintrag mit S=I3 bzw. R=I2 in die erste Liste, falls der Eintrag noch nicht vorhanden ist. Der Zähler CL, der die Verweildauer der Information bestimmt, wird dabei auf einen maximalen Wert (zum Beispiel 10) gesetzt. Ist die Information jedoch schon in der ersten Liste der Station N2 enthalten, wird lediglich der Zähler CL auf den maximalen Wert zurückgesetzt.

Entsprechendes gilt für die Funkstation N4: Hat die Funkstation N4 das Datenpaket DAT mit den Datenfeldern HA3 und HB3 empfangen, so wird auch N4 ihre zweite Liste mittels den Datenfeldern HA3 und HB3 überprüfen und gegebenenfalls ergänzen oder erneuern. Aufgrund des Empfangs eines Funkpakets von N3 wird N4 ihre erste Liste ergänzen oder erneuern.

Durch Austausch von Datenpaketen oder sonstigen Funkpaketen mit den beschriebenen Datenfeldern (Header) innerhalb des ganzen Funksystems wird erreicht, daß stets aktuelle Listen in jeder Funkstation vorliegen.

In Fig. 3b sind neben dem einen Datenpaket DAT zweit weitere Datenpakete DAT' und DAT" dargestellt, die die Funkstation N3 mit dem nächsten oder mit dem übernächsten Funkpaket einen Zyklus bzw. zwei Zyklen später aussendet. Das Datenpaket DAT' enthält ein erstes Datenfeld HA3' mit der Information S = I4, R = I3, CT=22 und CL=10. Demnach ist diesem ersten Datenfeld HA3' die Information zu entnehmen, daß die Funkstation N3 direkt von der Funkstation N4 Funksignale empfängt und daß diese Information zum Systemzeitpunkt CT = 22 (ein Zyklus später) erstellt wurde und noch nicht weitergeleitet wurde (CL = 10). Außerdem enthält das Datenpaket DAT' ein zweites Datenfeld HB3' folgender Information: S = I4, R = I5, CT = 4 und CL = 2. Demnach sind dem zweiten Datenfeld folgende Informationen zu entnehmen: Die Funkstation N5 kann direkt Funksignale von der Funkstation N4 empfangen. Diese Information wurde zum Systemzeitpunkt CT = 4 erstellt und ist bereits acht mal weitergeleitet worden (8= 10-CL).

Das weitere Datenpaket DAT" hat ein erstes Datenfeld HA3" mit folgender Information S = I2, R = I3, CT = 23 und CL 9. Dieses Datenfeld HA3" unterscheidet sich von dem Daten HA3 des ersten Datenpaketes DAT lediglich darin, daß es bereits einmal weitergeleitet wurde (1 = 10 - CL), und in der Funkstation N3 neuester Zeitstempel CT=23 trägt. Demnach sendet die Funkstation N3 zwei Zyklen später nochmals die selbe Information wie sie es bereits zusammen mit dem Daten paket DAT getan hat. Durch dieses wiederholte Aussenden wird sichergestellt, daß die Information nun auch bei solchen Funkstationen empfangen wird, die diese Information zuvor noch nicht empfangen haben. Wenn der Zähler CL einen untersten Wert erreicht hat, bedeutet dies, daß die Station N2 von der Station N3 nicht mehr empfangen wurde und somit ausgefallen oder abgeschattet ist. Die Information wird dann aus der ersten Liste verworfen und somit nicht mehr im Funk-LAN verbreitet. Durch diesen Mechanismus können die Informationen aus den ersten Listen im ganzen Funk-LAN gelöscht werden. Nach einer gewissen Zeit werden die Nachbarstationen diese Information aus den jeweiligen zweiten Listen ebenfalls verwerfen, bis im ganzen Netz bekannt ist, daß dieser Pfad S=I2, R=I3 nicht mehr benutzt werden kann. Das Datenpaket DAT" enthält außerdem ein zweites Datenfeld HB3" mit folgenden Informationen: S = I2, R = I1, CT = 7 und CL = 5. Demnach werden die anderen Funkstationen durch Aussenden dieses Datenfeldes darüber informiert, daß die Funkstation N2 direkt von der Funkstation N1 empfangen kann. Diese Information wurde bereits fünfmal (5 = 10-CL = 10-5) weitergeleitet. Wenn diese Information in der zweiten Liste der Station N3 nicht durch Empfang über eine beliebige andere Station im Funk-LAN erneuert wird, wird sie nach einigen weiteren Aussendungen aus der zweiten Liste in der Station N3 gelöscht, sobald der Zähler CL nach Herunterzählen bei jeder Aussendung eine untere Grenze erreicht hat. Durch diesen Mechanismus können die Pfade in den zweiten Listen im ganzen Funk-LAN gelöscht werden, wenn eine Verbindung nicht mehr vorhanden ist.

In dem oben beschriebenen Funksystem verfügen alle Funkstationen über die notwendige Information zum Weiterleiten von Funksignalen bei beliebigen Empfangssituationen. Diese Informationen werden fortlaufend aktualisiert. Das Funksystem ist besonders geeignet für den Einsatz als dezentrales mobiles Funksystem, z.B. für den Militärfunk, für die schnurlose Bürokommunikation oder für drahtlose Computer-Vernetzung (Funk-LAN). Das Funksystem muß nicht notwendigerweise mehrere Kanalpaare zur Verfügung stellen, sondern kann auch ein Gleichfrequenzfunksystem sein. In dem obigen Beispiel wurden die auszutauschenden Informationen zusammen mit den Nutzdaten übertragen. Es ist auch denkbar, die Informationen getrennt von den Nutzdaten, etwa über einen eigenen Signalisierungskanal, zu übertragen. Das obige Ausführungsbeispiel ist auf ein digitales Funksystem mit Paketübertragung gerichtet. Die Erfindung ist jedoch auf analoge Funkübertragung anwendbar.

## Patentansprüche

1. Dezentrales Funksystem mit mehreren Funkstationen (N1 bis N7), von denen jede Funkstation (N3) zumindest eine benachbarte Funkstation (N2; N4) hat, mit der sie in direkter Funkverbindung steht,
**dadurch gekennzeichnet, daß**
alle Funkstationen (N1 bis N7) Funksignale mit ihnen zugeordneten Kennungen (11 bis 17) aussenden, und daß jede Funkstation (N3) einen Speicher enthält, in dem eine erste Liste (LA3) mit denjenigen Kennungen (12; 14) abgelegt ist, die diese Funkstation (N3) direkt von der zumindest einen benachbarten Funkstation (N2; N4) empfängt, und in dem eine zweite Liste (LB3) mit denjenigen Kennungen (I3, I1; I3, I5) abgelegt ist, die die zumindest eine benachbarte Funkstation (N2; N4) direkt von den zu ihr benachbarten Funkfeststationen (N3, N1 ; N3, N5) empfängt und an diese Funkfeststation (N3) weiterleitet.

2. Dezentrales Funksystem nach Anspruch 1,
dadurch gekennzeichnet, daß
die in dem Speicher abgelegte zweite Liste (LB3) außerdem diejenigen Kennungen (I2, I4, I5, I6, I7) enthält, die die übrigen Funkstationen (N1, N5, N6, N7) empfangen und über die zumindest eine benachbarten Funkstation (N2; N4) an diese Funkstation (N3) weiterleiten.

3. Dezentrales Funksystem nach Anspruch 1 oder 2,
dadurch gekennzeichnet, daß
jede Funkstation (N4) beim Weiterleiten der von ihr direkt empfangenen Kennungen (13, 15) jeweils ihre eigene Kennung (14) hinzufügt, wodurch innerhalb der in dem Speicher abgelegten zweite Liste (LB3) für jede der Funkstationen (N4) angegeben ist, welche Kennungen (13, 15) sie empfangen hat.

4. Dezentrales Funksystem nach Anspruch 1 oder 2,
dadurch gekennzeichnet, daß
jede Funkstation (N4) beim Weiterleiten der von ihr direkt empfangenen Kennungen (I3, I1) jeweils einen Zeitstempel (CT) hinzufügt.

5. Dezentrales Funksystem nach Anspruch 1 oder 2,
dadurch gekennzeichnet, daß
jede Funkstation (N4) die von ihr direkt empfangen Kennungen (I3, I1) und die von anderen Funkstationen empfangenen Kennungen zu den benachbarten Funkstationen (N3, N5) weiterleitet, und daß jede Funkstation (N4) beim Weiterleiten einer jeden Kennung jeweils einen Zählerstand (CL) hinzufügt, der angibt wie oft diese Kennung bereits weitergeleitet worden ist.

6. Dezentrales Funksystem nach Anspruch 1,
dadurch gekennzeichnet, daß
das Funksystem ein digitales Funksystem ist, bei dem jede Funkstation (N1 bis N7) die Funksignale aussendet, und daß jedem Funksignal ein erstes Datenfeld (HA3) zugeordnet ist, das eine der empfangenen Kennungen (I2) aus der ersten Liste (LA3) enthält, und ein zweites Datenfeld (HB3) zugeordnet ist, das eine der empfangenen Kennungen (I1) aus der zweiten Liste (LB3) enthält.

7. Dezentrales Funksystem nach Anspruch 6,
dadurch gekennzeichnet, daß
jedes Funksignal Datenpakete (DAT), denen die Datenfelder (HA3, HB3) zugeordnet sind, enthält, daß das erste Datenfeld (HA3) die Kennung (I3) der Funkstation (N3) enthält, die das Datenpaket (DAT) aussendet, und daß das zweite Datenfeld (HB3) die Kennung (I7) derjenigen Funkststation (N7) enthält, die für den Empfang des Datenpaketes (DAT) bestimmt ist.

8. Dezentrales Funksystem nach Anspruch 1,
dadurch gekennzeichnet, daß
das Funksystem mobile Funkstationen (N1 bis N7) enthält, und daß die in dem Speicher einer jeden mobilen Funkstation (N3) abgelegten Listen (LA3, LB3) erneuert werden, falls sich zumindest für eine der Funkstationen die Empfangssituation ändert.

9. Dezentrales Funksystem nach Anspruch 8,
dadurch gekennzeichnet, daß
bei neu hinzukommenden Funkverbindungen die ersten Listen in denjenigen Funkstationen ergänzt werden, die diese neuen Funkverbindungen direkt empfangen und daß die zweiten Listen durch Weiterleiten bei denjenigen Funkstationen ergänzt werden, die die neu hinzukommenden Funkverbindungen nicht direkt empfangen können.

10. Dezentrales Funksystem nach Anspruch 8,
dadurch gekennzeichnet, daß
bei wegfallenden Funkverbindungen diese aus den ersten Listen in denjenigen Funkstationen gelöscht werden, die diese Funkverbindungen direkt empfangen konnten und daß diese Verbindungen aus den zweiten Listen bei denjenigen Funkstationen gelöscht werden, die diese Funkverbindungen nicht direkt empfangen konnten.

11. Funkstation (N3) für ein dezentrales Funksystem mit mehreren Funkstationen (N1 bis N7), bei dem die Funkstation (N3) zumindest eine benachbarte Funkstation (N2; N4) hat, mit der sie in direkter Funkverbindung steht,
**dadurch gekennzeichnet, daß**
die Funkstation (N3) Funksignale mit einer ihr zugeordneten Kennung (13) aussendet, und daß die Funkstation (N3) einen Speicher enthält, in dem eine erste Liste (LA3) mit denjenigen Kennungen (12; 14) abgelegt ist, die diese Funkstation (N3) direkt von der zumindest einen benachbarten Funkstation (N2; N4) empfängt, und in dem eine zweite Liste (LB3) mit denjenigen Kennungen (I3, I1; I3, I5) abgelegt ist, die die zumindest eine benachbarte Funkstation (N2; N4) direkt von den zu ihr benachbarten Funkfeststationen (N3, N1; N3, N5) empfängt und an diese Funkfeststation (N3) weiterleitet.
